**Europäisches Patentamt**

**European Patent Office**

**Office européen des brevets**

(11) Veröffentlichungsnummer: **0 163 288**
**B1**

## EUROPÄISCHE PATENTSCHRIFT

(45) Veröffentlichungstag der Patentschrift:
23.11.88

(21) Anmeldenummer: **85106529.2**

(22) Anmeldetag: **28.05.85**

(51) Int. Cl.⁴: **H 04 Q 11/04,** H 04 Q 1/24

(54) Verfahren zur Durchschalteprüfung eines Raummultiplex-Koppelnetzes.

(30) Priorität: **29.05.84 DE 3420071**

(43) Veröffentlichungstag der Anmeldung:
**04.12.85 Patentblatt 85/49**

(45) Bekanntmachung des Hinweises auf die Patenterteilung:
**23.11.88 Patentblatt 88/47**

(84) Benannte Vertragsstaaten:
**BE CH DE FR GB IT LI NL SE**

(56) Entgegenhaltungen:
**FR-A-2 252 711**
**FR-A-2 252 718**
**FR-A-2 281 605**
**FR-A-2 509 944**

(73) Patentinhaber: **Siemens Aktiengesellschaft Berlin und München, Wittelsbacherplatz 2, D-8000 München 2 (DE)**

(72) Erfinder: **Knorpp, Eberhard, Dipl.- Ing., Zugspitzstrasse 26, D-8035 Gauting (DE)**
Erfinder: **Binz, Reiner, Dipl.- Ing., Rosenstrasse 5, D-8021 Hohenschäftlarn (DE)**

LIBER, STOCKHOLM 1988

## Beschreibung

Die Erfindung betrifft ein Verfahren zur Durchschalteprüfung eines Raummultiplex-Koppelnetzes.

Insbesondere bei Raummultiplex-Koppelnetzen für die Bildkommunikation ist es wichtig, Fehler bei der Durchschaltung erkennen und möglichst eng eingrenzen zu können.

In diesem Zusammenhang ist es schon bekannt, jeweils nach einer Durchschaltung bei dem der betreffenden Verbindung entsprechenden Eingang des Koppelnetzes eine bestimmte Prüfbitkombination einzuspeisen und darauf hin sämtliche ausgangsseitigen Anschlüsse des Koppelnetzes auf den Empfang dieses Prüfbitmusters zu über wachen.

Es ist somit zwar möglich, eine Überprüfung daraufhin vorzunehmen, ob an dem der betreffenden neugeschalteten Verbindung entsprechenden Ausgang tatsächlich ein Signal auftritt und ob dieses Signal nicht auch an einem anderen Ausgang empfangen werden kann, was eine fehlerhafte Doppelverbindung darstellen würde.

Eine Lokalisierung des Durschschaltefehlers auf eine der Teileinheiten, aus denen Raumkoppelnetze üblicherweise aufgebaut sind, ist mit diesem Verfahren allerdings nicht ohneweiteres möglich. Hinzu kommt, daß die Durchführung dieses Verfahrens einen relativ großen Datenverkehr zwischen dem zentralen Steuerverk der Vermittlungsanlage und Teilsteuerverken erfordert, die einzelnen Koppelfeldteilen individuell zugeordnet sind.

Es ist auch schon vorgeschlagen worden, eine Durchschalteprüfung in der Form vorzunehmen, daß jeweils die kleinsten von einer Teilsteuerung gesondert beeinflußten Teileinheiten eines Koppelnetzes für sich im Zusammenhang mit jeder neu vorzunehmenden Durchschaltung in einem ersten Prüfdurchgang vor der Ausführung der Durchschaltung daraufhin überprüft werden, ob an dem der durchzuschaltenden Verbindung entsprechenden Ausgang der Teileinheit ein Ausgangssignal und an welchen übrigen Ausgängen ein Ausgangssignal auftritt und in einem zweiten Prüfdurchgang nach der Ausführung der Durchschaltung daraufhin überprüft werden, ob an dem der durchgeschalteten Verbindung entsprechenden Ausgang nunmehr ein Ausgangssignal auftritt und ob die Verhältnisse bei allen übrigen Ausgängen unverandert geblieben sind (siehe EP-A-0 162 270 veröffentlicht am 27.11.85). Eine Fehlermeldung wird bei diesem vorgeschlagenen Verfahren dann abgegeben, wenn im ersten Prüfdurchgang ein Ausgangssignal an dem genannten einen Ausgang oder im zweiten Prüfdurchgang ein Fehlen eines Ausgangssignals an dem genannten einem Ausgang und/oder an den übrigen Ausgängen eine Veränderung der Verhältnisse gegenüber dem ersten Prüfdurchgang festgestellt wird, soweit für eine solche Veränderung nicht das zwischenzeitliche Auslösen einer Verbindung verantwortlich ist. Es entfällt hier also die Einspeisung eines gesonderten Prüfsignals und die im Zuge der Durchführung der Prüfung auszuführenden Prüfschritte können durch die Teilsteuerungen veranlaßt werden, so daß hier nicht wie im vorstehend erwähnten bekannten Fall durch das Prüfverfahren ein wesentlich erhöhter Datenfluß zwischen Teilsteuerungen und Zentralsteuerung genommen werden muß. Da die Prüfung jeweils gesondert für die Teileinheiten durchgeführt wird, ist auch eine Fehlerlokalisierung bis auf diese Teileinheiten möglich, was andererseits natürlich mit schaltungsmäßigem Aufwand erkauft werden muß.

Bestimmte Fehlerkonstellationen sind mit dem genannten vorgeschlagenen Verfahren nicht erkennbar, so ist es z. B. nicht möglich, einen Fehler zu erfassen, der darin besteht, daß die Durchschaltung einer neuen Verbindung zur Entstehung einer Doppelverbindung und gleichzeitig dazu führt, daß eine ursprünglich zu dem von der Doppelverbindung betroffenen Ausgang führende, von einem anderen Eingang herkommende Verbindung aufgetrennt wird.

Die Aufgabe der vorliegenden Erfindung besteht daher darin, ein Verfahren anzugeben, das die Nachteile der geschilderten bekannten bzw. vorgeschlagenen Verfahren nicht aufweist.

Diese Aufgabe wird bei verbindungsindividuellem eingangsseitigem Einspeisen und ausgangsseitigem Auswerten einer Prüfinformation erfindungsgemäß dadurch gelöst, daß die Prüfinformation jeweils die den für die betreffende Verbindung benutzten Eingang bezeichnende Absenderadresse sowie die den dementsprechend zu benutzenden Ausgang kennzeichnende Zieladresse umfaßt, und empfangsseitig mit den durch diese Adresse gebildeten Verbindungsdaten verglichen wird.

Die Art der erfindungsgemäß verwendeten Prüfinformationen ermöglicht eine weitgehende Fehlerlokalisierung. Da die als Prüfinformationen gesendeten Adressen bei den meisten Arten von Raummultiplex-Koppelnetzen sowieso in den Anschlußgruppen, d.h. den dem Anschluß den ankommenden und abgehenden Leitungen dienenden Teilen des Koppelfeldes als Verbindungsdaten abgespeichert sind, läßt sich das erfindungsgemäße Verfahren mit relativ geringem zusätzlichen Aufwand durchführen.

Gemäß einer Ausgestaltung der Erfindung werden im Falle eines Raummultiplex-Koppelntzes, das Bestandteil eines Fernmeldesystems ist, bei dem auf den durch das Raummultiplex-Koppelnetz zu verbindenden Leitungen in mehreren periodisch sich wiederholenden Zeitspannen außer der durchgeschalteten Nutzinfomation der Signalisierung, der Steuerung und der Synchronisierung dienende Betriebsinformationen übertragen werden, die Prüfinformationen während der gesamten Dauer einer Verbindung anstelle der Signalisierungsinformationen übertragen, die ihrerseits eingangsseitig des Raumkoppelnetzes ausgeblendet oder überschrieben werden, so daß durch die Prüfung nicht nur Fehler bei der Vornahme der Durchschaltung sondern auch im Verlaufe einer Verbindung auftretende Fehler erkannt werden können.

Bei einer ersten Version des erfindungsgemäßen Verfahrens wird der erwähnte Vergleich unter Verwendung den Ausgangsleitungen individuell zugeordneter Einrichtungen vorgenommen, bei einer zweiten Version erfolgt der Vergleich in demjenigen Teil der Steuerung des Koppelnetzes, der für die Aktivierung des jeweiligen Koppelfeldausgangs verantwortlich ist.

Nachstehend wird die Erfindung anhand von Ausführungsbeispielen unter Bezugnahme auf die Zeichnung näher erläutert.

In der Zeichnung zeigen:

Fig. 1 ein Beispiel für die Gliederung eines Raummultiplex-Koppelnetzes.

Fig. 2 das Blockschaltbild einer Anschlußgruppe des Koppelfeldes gemäß Fig. 1.

Fig. 3 die sendeseitigen leitungsindividuellen Einrichtungen der Anschlußgruppe gemäß Fig. 2 zur Durchführung des erfindungsgemäßen Verfahrens.

Fig. 4 die empfangsseitigen leitungsindividellen Einrichtungen der Anschlußgruppe gemäß Fig 2 zur Durchführung des erfindungsgemäßen Verfahrens.

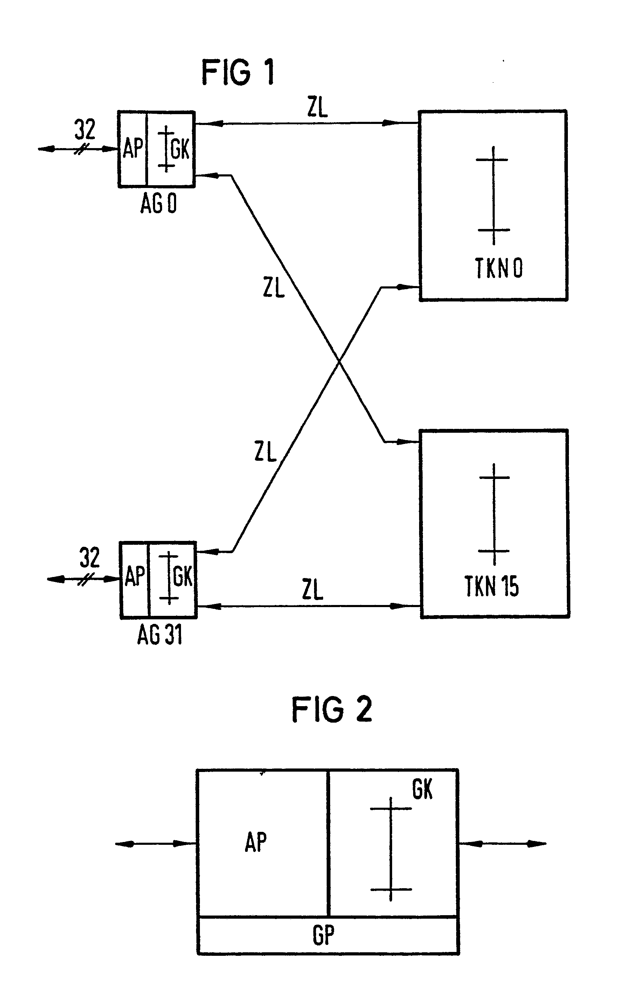

Das in Figur 1 dargestellte Raummultiplex-Koppelfeld weist 32 dezentrale Koppelfeldteile AG0 bis AG31 auf, an die jeweils 32 über dieses Koppelnetz zu verbindende Vierdrahtleitungen angeschlossen sind.

Diese Anschlußgruppen weisen einerseits einen Teil AP auf, der Einrichtungen zur Pufferung, Taktanpassung und ggf. zur Zufügung bzw. Entfernung von Stopfimpulsen (stuffing, desstuffing) umfaßt. Andererseits gehört zu diesen Anschlußgruppen ein Gruppenkoppler GK, der je nachdem ob es sich bei den angeschlossenen Leitungen um Teilnehmerleitungen oder um Verbindungsleitungen handelt eine Verkehrskonzentrierung oder eine Verkehrsdekonzentrierung bewirkt. Im angenommenen Fall weisen die Gruppenkoppler zur Anschlußseite hin 32 Anschlüsse und zur Koppelfeldseite hin 64 Anschlüsse auf, bewirken also zum übrigen Teil des Koppelfeldes hin eine Dekonzentrierung des Verkehrs.

Weiterer Bestandteil des in Figur 1 dargegestellten Koppelnetzes sind zentrale Koppelnetzteile TKN0 bis TKN15, die über Zwischenleitungen ZL derart mit den koppelfeldseitigen Ausgängen der Anschlußgruppen AG0 bis AG31 verbunden sind, daß jeder der zentralen Koppelfeldteile von jeder Anschlußgruppe aus erreicht werden kann.

Ein derartiges Raummultiplex-Koppelnetz stellt eine dreistufige Anordnung dar, es werden nämlich beispielsweise bei einer Verbindung einer Vierdrahtleitung, die an die Anschlußgruppe AG0 angeschlossen ist mit einer Vierdrahtleitung, die an die Anschlußgruppe AG31 angeschlossen ist, das Gruppenkoppelfeld GK der Anschlußgruppe AG0, eines der zentralen Koppelfeldteile TKN0 bis TKN15 und das Gruppenkoppelfeld GK der Anschlußgruppe AG31, bzw. diese Koppelfeldteile in umgekehrter Richtung durchlaufen.

In Figur 2 ist eine der Anschlußgruppen AG0 nochmals in Blockbildform dargestellt, woraus man ersieht, daß zu den schon erwähnten Teilen AP und GK noch ein Gruppenprozessor GP kommt, der die im Teil AP sich abspielenden Vorgänge steuert sowie die Einstellung des Gruppenkoppelfeldes GK bewirkt. Auf der linken Seite der Anschlußgruppe gemäß Figur 1 Vierdrahtleitungen und auf der rechten Seite die Zwischenleitung ZL angeschlossen zu denken.

Bei der Erläuterung des erfindungsgemäßen Verfahrens wird vorausgesetzt, daß das Raummultiplex-Koppelnetz, bei dem die erfindungsgemäße Durchschalteprüfung durchgeführt werden soll, Bestandteil eines Fernmeldesystems ist, bei dem auf den erwähnten Vierdrahtleitungen nicht nur Nutzinformationen übertragen werden, sondern auch der Signalisierung, Steuerung und Synchronisierung dienende Betriebsinformationen, weswegen die übertragung auf diesen Vierdrahtleitungen in periodisch sich wiederholenden Zeitspannen erfolgt, die jeweils einer anderen Art der genannten Informationen zugeordet sind. Die genannten Betriebsinformationen brauchen nicht über das Koppelnetz geführt zu werden, weswegen sie eingangsseitig ausgeblendet werden und ausgangsseitig ggf. ensprechende Informationen wieder zugefügt werden. Damit sind auf dem über das Koppelnetz führende Übertragungsweg Zeitspannen frei, die, wie angedeutet, für die Übertragung der erfindungsgemäßen vorgesehenen Prüfinformationen ausgenutzt werden.

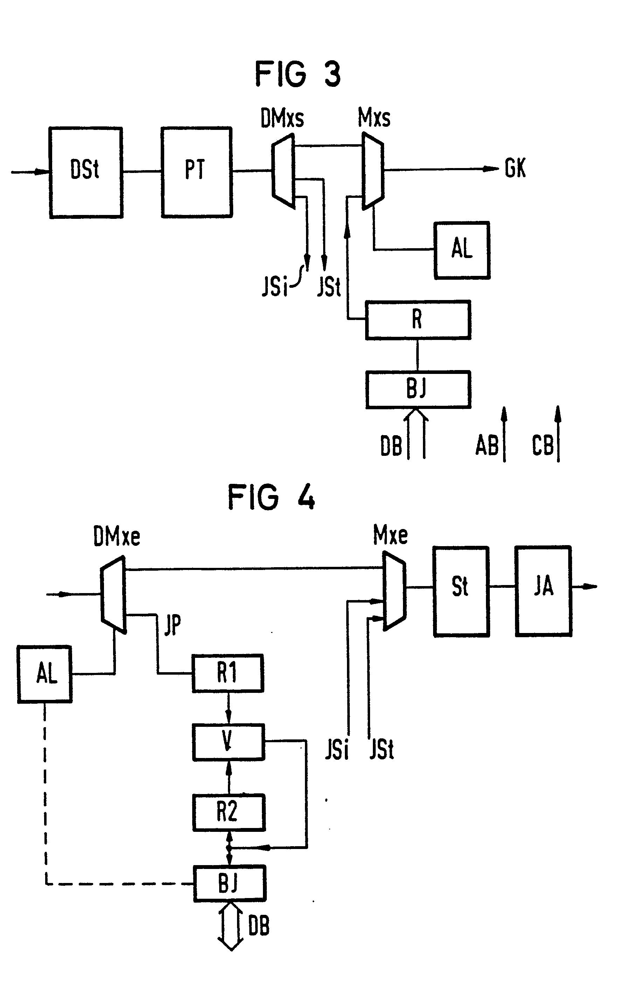

In der Figur 3 sind empfangsseitige leitungsindividuelle Teile der Anschlußeinheit gemäß Figur 2 und insbesondere der Durchführung des erfindungsgemäßen Verfahrens dienende Teile näher dargestellt. Die Figur 3 zeigt demnach außer einer Einrichtung zur Entfernung von Stopfimpulsen DSt und er Einrichtung zur Pufferung und Taktanpassung PT, in der ein Rahmenkennungswort als der Synchronisierung dienende Betriebsinformation ausgewertet wird, einen Demultiplexer DMxs, über dessen mit ISi und ISt bezeichnete Ausgänge der Signalisierung und Steuerung dienende Betriebsinformationen ausgeblendet und dem nicht dargestellten Gruppenprozessor der Anschlußgruppe zugeführt werden. Ein weiterer Ausgang des Demultiplexers DMxs ist mit einem Eingang eines Multiplexers Mxs verbunden, dessen anderer Eingang mit dem Ausgang eines Registers R in Verbindung steht und dessen Ausgang an einen der 32 Eingänge des Gruppenkoppelfeldes GK gem. Figur 2 angeschlossen zu denken ist. Die Steuerung des Multiplexers bewirkt eine Ansteuerlogik AL.

Das erwähnte Register R steht über eine Busschnittstelle BI mit einem Datenbus DB in Verbindung, über den ein Datenverkehr mit dem Gruppenprozessor GP gem. Figur 2 der Anschlußgruppe möglich ist.

Ferner sind in der Figur 3 ein Adreßbus AB und ein Steuerbus CB angedeutet, über die entsprechende Adressen und Befehle zur Durchschaltung des Gruppenkopplers vom Gruppenprozessor GP aus geliefert werden.

Über den erwähnten Datenbus DB werden in Durchführung des erfindungsgemäßen Verfahrens die genannten Prüfinformationen an das Register R geliefert. Sie bestehen aus einer Absender- und einer Zieladresse. Im Falle der Verbindung einer an die Anschlußgruppe AG0 angeschlossenen Vierdrahtleitung mit einer Vierdrahtleitung, die an die Anschlußgruppe AG31 angeschlossen ist und unter der Voraussetzung, daß die Verbindungsaufbaurichtung von einem Teilnehmer, der mit der an die Anschlußgruppe AG0 angeschlossenen Vierdrahtleitung verbunden ist, zu dem Teilnehmer führt, der an die andere genannte Vierdrahtleitung angeschlossen ist, bedeutet dies, daß im Register R gem. Figur 3, das Bestandteil der Anschlußgruppe AG0 ist, als Absenderadresse die Adresse der betreffenden an diese Anschlußgruppe angeschlossenen Vierdrahtleitung und die Adresse dieser Anschlußgruppe gespeichert ist und als Zieladresse die Adresse der Anschlußgruppe AG31 und der betreffenden daran angeschlossenen Vierdrahtleitung.

Gesteuert durch die Ansteuerlogik AL wird die im Register R enthaltene Prüfinformation in einer der Zeitspannen, in denen bis zu diesem Punkt des Systems entweder das Rahmenkennungswort oder Signalisierungs- oder Steuerinformation übertragen worden sind, eingeblendet und damit dem Gruppenkoppelfeld GK der Anschlußgruppe zugeführt.

Ebenfalls leitungsindividuell sind bei allen Anschlußgruppen AG0 bis AG31 empfangsseitige der Durchführung des erfindungsgemäßen Prüfungsverfahrens dienende Schaltungsteile vorgesehen, die im einzelnen in Figur 4 dargestellt sind.

Zu diesen Bestandteilen gehört ein Demultiplexer DMxe, dessen Eingang mit einem Anschluß für die Übertragung in abgehender Übertragungsrichtung des Gruppenkoppelfeldes GK der betreffenden Anschlußgruppe verbunden ist. Über einen mit IP bezeichneten Ausgang dieses Demultiplexers wird die vom Gruppenkoppelfeld herkommende Prüfinformation, gesteuert durch eine Ansteuerlogik AL ausgeblendet und einem Register R1 zugeführt.

Ein anderer Ausgang des Demultiplexers DMxe ist mit dem einen Eingang eines Multiplexers Mxe verbunden, über dessen übrige Eingänge RKW, ISi und ISt das Rahmenkennungswort und ggf. Signalisierungs und Steuerinformationen in den für die Übertragung dieser Informationen vorgesehenen Zeitspannen eingeschleift werden. Der Ausgang des Multiplexers Mxe führt über eine ggf. vorhandene Einrichtung St zur Zufügung von Stopfimpulsen und eine Einrichtung IA zur Impulsaufbereitung zum Anschluß für den Vierdrahtleitungszweig für abgehende Übertragungsrichtung.

Die Figur 4 zeigt ferner einen an den Ausgang des Registers R1 angeschlossenen Vergleicher V, dessen anderer Vergleichereingang mit einem Register R2 verbunden ist. Das Register R2 steht außerdem über eine Busschnittstelle BI mit einem Datenbus DB in Verbindung, über den ein Datenaustausch mit dem Gruppenprozessor der Anschlußgruppe möglich ist.

Wenn wie obenstehend angegeben eine Verbindung zwischen einer an die Anschlußgruppe AG0 angeschlossenen Vierdrahtleitung mit einer an die Anschlußgruppe AG31 angeschlossenem Vierdrahtleitung durchgeschaltet wird und die Verbindungsaufbaurichtung von der Anschlußgruppe AG0 zur Anschlußgruppe AG31 führt, wird in der mit der betreffenden einen Leitung zugeordneten in der Anschlußgruppe AG0 befindlichen empfangsseitigen Einrichtung gem. Figur 3 während der Zeitspannen, in denen auf der angeschlossenen Vierdrahtleitung bis zu dieser Anschlußgruppe hin beispielsweise das Rahmenkennungswort übertragen würde, die entsprechend aus Absender und Zieladresse bestehende, im Register R befindliche Prüfinformation gesteuert durch die Ansteuerlogik AL, ausgelesen und über das Gruppenkoppelfeld GK dieser Anschlußgruppe, einen der zentralen Koppelfeldteile TK0 bis TKN15 und über das Gruppenkoppelfeld GK der Anschlußeinheit AG31 übertragen. In der empfangsseitigen Einrichtung gem. Fig. 4, die der anderen an der Verbindung beteiligten, an die Anschlußgruppe AG31 angeschlossenen Vierdrahtleitung zugeordnet ist, wird die Prüfinformation durch den Demultiplexer DMxe ausgeblendet und in das Register R1 eingeschrieben. Im Zuge des Verbindungsaufbaus der betrachteten Verbindung sind von dem Gruppenprozessor der Anschlußgruppe AG31 her entsprechende Einstellinformationen in das Register R2 eingeschrieben worden. Wenn also bei einer ordnungsgemäßen Durschaltung die Prüfinformation an der Zielanschlußgruppe eintrifft, wird der Vergleicher V ein positives Vergleichsergebnis abgeben. Im anderen Fall wird durch den Vergleicher über die Busschnittstelle BI und den Datenbus DB eine Fehlermeldung an den Gruppenprozessor der Anschlußgruppe geliefert.

Sollte es bei der betrachteten Durschaltung zu einer Doppelverbindung gekommen sein, dann wird dies durch den Empfang der betreffenden Prüfinformation in der empfangsseitige Einrichtung einer anderen Vierdrahtleitung, die möglicherweise sogar einer anderen Anschlußgruppe angehört, zu einer Nichtübereinstimmung von empfangener Prüfinformation mit gespeicherten Verbindungsdaten führen und damit erkannt werden. Wenn eine fehlerhafte Doppelverbindung zu einer Leitung der "richtigen" Anschlußgruppe führt, dann läßt sich aufgrund der empfangenen Zieladresse diese Anschlußgruppe als Fehlerort lokalisieren.

Führt die Doppelverbindung zu einer "falschen" Anschlußgruppe, was aus der Zieladresse erkennbar ist, dann kommt als Fehlerort die durch die Absenderadresse gekennzeichnete Anschlußgruppe oder einer der zentralen Koppelfeldteile TKN0, TKN15 infrage.

Unter Umständen genügt es, die vorstehend geschilderte Prüfung vor einer Nutzübertragung durchzuführen, in welchem Fall für die Übertragung der Prüfinformation die im Normalbetrieb für die Übertragung der Nutzinformation vorgesehenen Zeitspannen ausgenutzt werden können.

Die Auswertung der Prüfinformation kann auch in der empfangsseitigen Gruppensteuerung geschehen, in welchem Fall der Vergleicher V und das Register R2 entfallen. Die Abfragezeitpunkte, werden dann ebenfalls von der Gruppensteuerung her bestimmt, was durch die gestrichelte Verbindung zwischen der Busschnittstelle BI und der Ansteuerlogik AL zum Ausdruck gebracht ist.

**Patentansprüche**

1. Verfahren zur Durchschalteprüfung eines Raummultiplex-Koppelnetzes durch verbindungsindividuelles eingangsseitiges Einspeisen und ausgangsseitiges Auswerten einer Prüfinformation,
    dadurch gekennzeichnet, daß die Prüfinformation jeweils die den für die betreffende Verbindung benutzten Eingang kennzeichnende Absenderadresse sowie die dem entsprechend zu benutzenden Ausgang kennzeichnende Zieladresse umfaßt und empfangsseitig mit den durch diese Adressen gebildeten Verbindungsdaten verglichen wird.
2. Verfahren nach Anspruch 1 zur Verwendung in einem Fernmeldesystem, bei dem auf den durch das Raummultiplex-Koppelnetz zu verbindenden Leitungen in periodisch sich wiederholenden Zeitspannen außer der durchzuschal tenden Nutzinformation der Signalisierung, Steuerung und Synchronisierung dienende Betriebsinformationen übertragen werden,
    dadurch gekennzeichnet, daß die Prüfinformationen nur während des Verbindungsaufbaus in den für die Nutzinformationen vorgesehenen Zeitspannen übertragen werden, und daß empfangsseitig einmalig ein Vergleich mit den gespeicherten Einstellinformationen vorgenommen wird.
3. Verfahren nach Anspruch 1 zur Verwendung in einem Fernmeldesystem, bei dem auf den durch das Raummultiplex-Koppelnetz zu verbindenden Leitungen in mehreren periodisch sich wiederholenden Zeitspannen außer der durchzuschaltenden Nutzinformation der Signalisierung, Steuerung und Synchronisierung dienende Betriebsinformationen übertragen werden,
    dadurch gekennzeichnet, daß die Prüfinformation während der gesamten Dauer einer Verbindung anstelle einer der Betriebsinformationen, die eingangsseitig des Raummultiplex-Koppelnetzes ausgeblendet oder überschrieben und ggf. ausgangsseitig des Raummultiplex-Koppelnetzes wieder zugefügt werden, in den für diese Betriebsinformationen vorgesehenen Zeitspannen über das Raummultiplex-Koppelnetz übertragen werden, und daß empfangsseitig periodisch ein Vergleich mit den gespeicherten Einstell-Informationen vorgenommen wird.
4. Verfahren nach einem der vorhergehenden Ansprüche,
    dadurch gekennzeichnet, daß der empfangsseitige Vergleich jeweils mit einer der betreffenden Ausgangsleitung individuell zugeordneten Einrichtung (DMxe, R1, V, R2) vorgenommen wird.
5. Verfahren nach einem der Ansprüche 1 bis 3,
    dadurch gekennzeichnet, daß der Vergleich in demjenigen Teil der Steuerung des Koppelnetzes vorgenommen wird, der für die Aktivierung des jeweiligen Koppelfeldausgangs verantwortlich ist.

**Claims**

1. A method of testing switched connections of a space division multiplex switching network by a connection-individual, input-end feeding-in of an item of test information and the output-end analysis thereof,
    characterised in that the respective item of test information comprises the sender address, which identifies the input used for the respective connection, and the target address which identifies the output which is to be used accordingly, and at the receiving end is compared with the items of connection data formed by these addresses.
2. A method as claimed in claim 1 for use in a telecommunications system in which, at periodically repetitive time intervals, in addition to the useful information which is to be switched, items of operating information serving for signalling, control and synchronisation purposes are transmitted on the lines which are to be connected by the space division multiplex switching network,

characterized in that the items of test information are transmitted only during the connection establishment in the time intervals provided for the useful information, and that at the receiving end one single comparison is carried out with the stored items of setting up information.

3. A method as claimed in claim 1 for use in a telecommunications system in which, in a plurality of periodically repetitive time intervals, in addition to the useful information which is to be switched, items of operating information serving for signalling, control and synchronisation purposes are transmitted on the lines which are to be connected by the space division multiplex switching network,

characterised in that for the entire duration of a connection, in place of one of the items of operating information which are gated out or overwritten at the input end of the space division multiplex switching network and where appropriate are re-attached at the output end of the space division multiplex switching network, the test information is transmitted via the space division multiplex switching network in the time intervals provided for these items of operating information, and that at the receiving end the periodic comparison with the stored items of setting-up information is carried out.

4. A method as claimed in one of the preceding claims,

characterised in that the receiving-end comparison is in each case carried out using a device (DMxe, R1, V, R2) individually assigned to the respective output line.

5. A method as claimed in one of the claims 1 to 3,

characterised in that the comparison takes place in that part of the control unit of the switching network which is responsible for the activation of the respective switching network output.

## Revendications

1. Procédé pour le contrôle de l'interconnexion directe dans un champ de couplage à multiplexage spatial moyennant l'injection côté entrée et l'évaluation côté sortie d'une information de contrôle, qui sont prévues pour chaque liaison, caractérisé par le fait que l'information de contrôle comporte respectivement l'adresse d'émission caractérisant l'entrée utilisée pour la liaison considérée ainsi que l'adresse de destination caractérisant la sortie devant être utilisée de façon correspondante, et est comparée, côté réception, aux données de la liaison, formées par ces adresses.

2. Procédé suivant la revendication 1, pour son application dans un système de télécommunications, dans lequel en dehors de l'information utile devant être transférée, les informations de service utilisées pour la signalisation, la commande et la synchronisation sont transmises pendant des intervalles de temps se répétant périodiquement, dans les lignes devant être réunies par le réseau de couplage à multiplexage spatial, caractérisé par le fait que les informations de contrôle sont transmises pendant des intervalles de temps prévu pour les informations utiles, uniquement au cours de l'établissement de la liaison, et que, côté réception, une comparaison avec les informations de réglage mémorisées est exécutée une fois.

3. Procédé suivant la revendication 1, pour son application dans un système de télécommunications, dans lequel en dehors de l'information utile devant être transférée, des informations de service utilisées pour la signalisation, la commande et la synchronisation sont transmises pendant des intervalles de temps se répétant périodiquement, dans les lignes devant être réunies par le réseau de couplage à multiplexage spatial, caractérisé par le fait que l'information de contrôle est transmise par l'intermédiaire du réseau de couplage à multiplexage spatial pendant toute la durée d'une liaison, à la place de l'une des informations de service, qui sont extraites sur le côté entrée du réseau de couplage à multiplexage spatial ou sur lesquelles est exécuté un enregistrement en superposition ou bien qui sont à nouveau ajoutées éventuellement, à la sortie du réseau de couplage à multiplexage spatial, pendant les intervalles de temps prévus pour ces informations de services et que, côté réception, une comparaison avec les informations de réglage mémorisées est exécutée périodiquement.

4. Procédé suivant l'une des revendications précédentes, caractérisé par le fait que la comparaison effectuée côté réception est exécutée respectivement avec un dispositif (DMxe, R1, V, R2) associé individuellement à la ligne de sortie considérée.

5. Procédé suivant l'une des revendications 1 à 3, caractérisé par le fait que la comparaison est exécutée dans la partie du système de commande du réseau de couplage, qui est responsable de l'activation de la sortie respective du champ de couplage.

# FIG 1

# FIG 2

# FIG 3

| DSt | PT |

DMxs    Mxs

JSi    JSt

GK

AL

R

BJ

DB    AB    CB

# FIG 4

DMxe    Mxe

| St | JA |

JP

AL    R1

JSi    JSt

V

R2

BJ

DB